(19) **Europäisches Patentamt**

**European Patent Office**

**Office européen des brevets**

(11) **EP 1 241 662 B1**

(12) **EUROPEAN PATENT SPECIFICATION**

(45) Date of publication and mention
of the grant of the patent:
**21.06.2006 Bulletin 2006/25**

(51) Int Cl.:
**G10L 15/20** (2006.01)

(21) Application number: **02100251.4**

(22) Date of filing: **14.03.2002**

(54) **Speech recognition with compensation for both convolutive distortion and additive noise**

Spracherkennung mit Kompensation konvolutiver Verzerrung und additiven Rauschens

Reconnaissance de la parole avec compensation de distorsion convolutif et de bruit additif

(84) Designated Contracting States:
**DE FR GB**

(30) Priority: **14.03.2001 US 275487 P**

(43) Date of publication of application:
**18.09.2002 Bulletin 2002/38**

(73) Proprietor: **TEXAS INSTRUMENTS
INCORPORATED
Dallas,
Texas 75251 (US)**

(72) Inventor: **Gong, Yifan
Plano, Texas 75025 (US)**

(74) Representative: **Holt, Michael
Texas Instruments Ltd.,
EPD MS/13,
800 Pavilion Drive
Northampton Business Park,
Northampton NN4 7YL (GB)**

(56) References cited:
- **YAMAMOTO H ET AL: "Fast speech recognition algorithm under noisy environment using modified CMS-PMC and improved IDMM+SQ" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 April 1997 (1997-04-21), pages 847-850, XP010225927 ISBN: 0-8186-7919-0**
- **SHOZAKA M ET AL: "A non-iterative model-adaptive E-CMN/PMC approach for speech recognition in car environments" 5TH EUROPEAN CONFERENCE ON SPEECH COMMUNICATION AND TECHNOLOGY. EUROSPEECH '97. RHODES, GREECE, SEPT. 22 - 25, 1997, EUROPEAN CONFERENCE ON SPEECH COMMUNICATION AND TECHNOLOGY. (EUROSPEECH), GRENOBLE: ESCA, FR, vol. 1 OF 5, 22 September 1997 (1997-09-22), pages 287-290, XP002203281**
- **KOSAKA T ET AL: "Instantaneous environment adaptation techniques based on fast PMC and MAP-CMS methods" ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, 12 May 1998 (1998-05-12), pages 789-792, XP010279271 ISBN: 0-7803-4428-6**

EP 1 241 662 B1

## Description

Field of Invention

This invention relates to speech recognition and more particularly to compensation for both background noise and channel distortion.

Background of Invention

A speech recognizer trained with relatively a quiet office environment speech data and operating in a mobile environment may fail due to at least to the two distortion sources of back ground noise and microphone changes. The background noise may be from a computer fan, car engine, and/or road noise. The microphone changer may be due to the quality of the microphone, hand-held or hands-free and, a position to the mouth. In mobile application of speech recognition, both the microphone conditioner and background noise are subject to change.

Cepstral Mean Normalization (CMN) removes utterance mean and is a simple and effective way of dealing with convolutive distortion such as telephone channel distortion. See "Effectiveness of Linear Prediction Characteristics of the Speech Wave for Automatic Speaker

Identification and Verification" of B. Atal in Journal of Acoustics Society of America, Vol. 55: 1304-1312, 1974. Spectral Subtraction (SS) reduces background noise in the feature space. See article "Suppression of Acoustic Noise in Speech Using Spectral Subtraction" of S.F. Boll in IEEE Transactions on Acoustics, Speech and Signal Processing, ASSP-27 (2): 113-129, April 1979. Parallel Model Combination (PMC) gives an approximation of speech models in noisy condition from noise-free speech models and noise estimates. See "An Improved Approach to the Hidden Markov Model Decomposition of Speech and Noise" of M.J. F. Gales and S. Young in Proceedings of IEEE International Conference on Acoustics, Speech and Signal Processing, Volume 1, pages 233-236, U.S.A., April 1992. The techniques do not require any training data.

Joint compensation of additional noise and convolutive noise can be achieved by the introduction of a channel model and a noise model. A spectral bias for additive noise and a cepstral bias for convolutive noise are introduced in an article by M. Afify, Y. Gong, and J. P. Haton. This article is entitled "A General Joint Additive and Convolutive Bias Compensation Approach Applied to Noisy Lombard Speech Recognition" in IEEE Trans. on Speech and Audio Processing, 6(6): 524-538, November 1998. The five biases can be calculated by application of Expectation Maximization (EM) in both spectral and convolutive domains. A procedure by J.L. Gauvain, et al, is presented to calculate convolutive component, which requires rescanning of training data. See J.L. Gauvain, L. Lamel, M. Adda-Decker, and D. Matrouf entitled "Developments in Continuous Speech Dictation using the ARPA NAB News Task." In Proc. of IEEE International Conference on Acoustics, Speech, and Signal Processing, pages 73-76, Detroit, 1996. Solution of the convolutive component by steepest descent method has also been reported. See Y. Minami and S. Furui entitled "A Maximum Likelihood Procedure for a Universal Adaptation Method Based on HMM Composition." See Proc. of IEEE International Conference on Acoustics, Speech and Signal Processing, pages 129-132, Detroit, 1995. A method by Y. Minami and S. Furui needs additional universal speech models, and redestination of channel distortion with the universal models when channel changes. See Y. Minami and S. Furui entitled "Adaptation Method Based on HMM Composition and EM Algorithm" in Proceedings of IEEE International Conference on Acoustics, Speech and Signal Processing, pages 327-330, Atlanta 1996.

The techniques presented by M.F.J. Gales in "PMC for Speech Recognition in Additive and Convolutional Noise," Technical Report TR-154, CUED/F-INFENG, December 1993 needs two passes of the test utterance, e.g., parameter estimation followed by recognition, several transformations between cepstral and spectral domains, and a Gaussian mixture model for clean speech.

Alternatively, the nonlinear changes of both type of distortions can be approximated by linear equations, assuming that the changes are small. Jacobian approach, which models speech model parameter changes as the product of a jacobian matrix and the difference in noisy conditions, and statistical linear approximation are along this direction. See S. Sagayama, Y. Yamaguchi, and S. Takahashi entitled "Jacobian Adaptation of Noisy Speech Models," in Proceedings of IEEE Automatic Speech Recognition Workshop, pages 396-403, Santa Barbara, CA, USA, December 1997. IEEE Signal Processing Society. Also see "Statistical Linear Approximation for Environment Compensation" of N.S. Kim, IEEE Signal Processing Letters, 5(1): 8-10, January 1998.

Maximum Likelihood Linear Regression (MLLR) transforms HMM parameters to match the distortion factors. See "Maximum Likelihood Linear Regression for Speaker Adaptation of Continuous Density HMMs" by C.J. Leggetter and P.C. Woodland in Computer, Speech and Language, 9(2): 171-185, 1995. This method is effective for both sources but requires training data and introduces the dependence to the speakers. Yamamoto H et al: "Fast speech recognition algorithm under noisy environment using modified CMS-PMC and improved IDMM+SQ", ICASSP 1997, discloses model adaptation by combining PMC and CMN.

Summary of Invention

The invention is defined by the independent claims. Embodiments are as set forth in the dependent claims.

In accordance with one establishment of the present inventor a new method that handles simultaneously noise and channel distortions to make a speaker independent system robust to a wide variety of noises and channel distortions.

Description of Drawing

Figure 1 illustrates a speech recognizer according to one embodiment of the present invention; and

Figure 2 illustrates the method of the present invention.

Description of Preferred Embodiments of the Present Invention

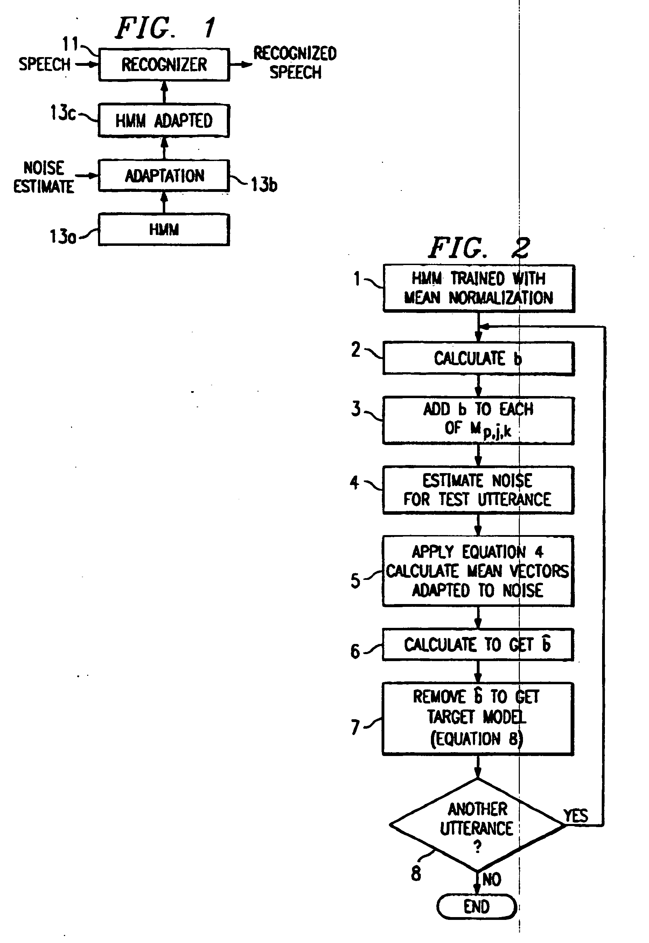

Referring to Fig. 1 there is illustrated a speech recognizer according to the present invention. The speech is applied to recognizer 11. The speech is compared to Hidden Markov Models (HMM) 13 to recognize the text. The models initially provided on those with speech recorded in a quiet environment and the microphone of good quality. We want to develop a speech model set suitable for operating in the simultaneous presence of channel/microphone distortion and background noise. In accordance with the present invention, a speech model set is provided using statistics about the noise and speech. A low computation cost method integrates both PMC and CMN.

Referring to Figure 2, the first Step 1 is to start with HMM models trained on clean speech, with cepstral mean normalization. We modify these models to get models to compensate for channel/microphone distortion (convolutive distortion) and simultaneous background noise (additive distortion). For an HMM model, we have a lot of parameter but only change one subset of the parameters and that is mean vectors $m_{p,j,k}$. The mean vectors $m_{p,j,k}$ of the original model space is modified where p is the index of the Probability Density Function (PDF), j is the state and k is the mixing component.

The second Step 2 is to calculate which is the mean mel-scaled cesptrum coefficients (MFCC) vector over the trained database. Scan all data and calculate the mean to get b.

The third Step 3 is to add mean b to each of this mean vector pool represented by $m_{p,j,k}$ equation (1) to get:

$$\overline{m}_{p,j,k} = m_{p,j,k} + b.$$

$$(1)$$

For example, there could be 100 PDFs, 3 states per PDF and 2 vectors per state, or a total of 600 vectors.

The fourth Step 4 is for a given input test utterance, an estimate of the background noise vector $\tilde{X}$ is calculated.

Let $u^l \triangleq [u_1^l, u_2^l, \cdots u_D^l]^T$ and $v^l \triangleq [v_1^l, v_2^l, \cdots v_D^l]^T$, where $l$ means that the values are represented in log-spectral domain.

We introduce the combination operator $\oplus$ such that:

$$w^l \triangleq u^l \oplus v^l = [w_1^l, w_2^l, \cdots w_D^l]^T \qquad (2)$$

with

$$w_j^l = \log(\exp(u_j^l) + \exp(v_j^l))$$

$$(3)$$

In Step 5, we calculate the mean vectors adapted to the noise $\tilde{X}$ using equation 4.

$$\hat{m}_{p,j,k} = IDFT(DFT(\overline{m}_{p,j,k}) \oplus DFT(\tilde{X})).$$

$$(4)$$

where *DFT* and *IDFT* are, respectively, the DFT and inverse DFT operation, $\overline{m}_{p,j,k}$ is the noise compensated mean vector. Equation 4 involves several operators. DFT is Discrete Fourier Transform and IDFT is the Inverse Discrete Fourier Transform. The $\oplus$ is an operation with two vectors. A $\oplus$ B = C. How $\oplus$ is defined, we look at equations 2 and 3. Equation 2 says the operation $\oplus$ operates on two vectors u and v and the result is a vector of D dimension or $[w_1^l, w_2^l, \cdots w_D^l]^T$ where T is the transposition. We take the two vectors and produce another vector. We need to specify each element in the resultant vector. Equation 3 says that the jth element in that vector ($w_j^l$) is defined by the exponential of the element of u added to the exponential of the jth element of v and take the log of the combination of the exponential of u added to the exponential of the jth element of v. This completes the definition of Equation 4.

In the following steps, we need to remove the mean vector $\hat{b}$ of the noisy data y over the noisy speech space N (from the resultant model). One may be able to synthesize enough noisy data from compensated models but this requires a lot of calculation. In accordance with the present invention the vector is calculated using statistics of the noisy models. The whole recognizer will operate with CMN (cepstral mean normalization mode), but the models in Equation 4 are no longer mean normalized. We have dealt with additive noise. The second half of the processing is removing the cepstral mean of our models defined in Equation 4. This is not difficult because we have the models in Equation 4. In Step 6, we need to integrate all the samples generated by Equation 4 to get the mean. Mean is $\hat{b}$. Equation 5 is this integration.

Let , be the variable denoting PDF index, *J* be the variable for state index, and *K* be the variable for mixing component index.

$$\hat{b} = E\{y\} \qquad\qquad (5)$$

$$= N^y \sum_p \sum_j \sum_k P_,(p) P_{J|,}(j,p) P_{K|,,J}(k|p,j) p_{Y|,,,J,K}(y|p,j,k) dy$$

Since

$$p(y|p,j,k) = N(y, IDFT(DFT(\overline{m}_{p,j,k}) \oplus DFT(\tilde{X})), E_{p,j,k}) \qquad (6)$$

We have

$$\hat{b} = \sum_p \sum_j \sum_k P_H(p) P_{J|H}(j|p) P_{K|H_l,J}(k|p,j) \hat{m}_{p,j,k}$$

$$(7)$$

Equation 7 shows that $\hat{b}$ can be worked out analytically, and it is not necessary to do the physically generation and integration. The final result is Equation 7 which is the integration into several sums. Sums over probability density functions and the sum over states and sum over mixing components. Then you have several quantities. The $P_H$ is the probability of having the PDF index. The $P_J$ given H is the probability of being in the state if given the PDFp. The next is the probability the mixing component p,j given we have the PDF index. The mean vector of the compensated mode. To make this complete we remove this **b** from the compensated model to get the target model. This is Step 7. The target model is:

$$\dot{m}_{p,j,k} \;=\; \hat{m}_{p,j,k} \;-\; \hat{b} \qquad\qquad (8)$$

This is what we want to load into our recognizer. This operation is done for each utterance.

Calculation of **b** thus requires the knowledge of probability of each PDF. There are two issues with P $(, = p)$ :

• It needs additional storage space.

• It is dependent of the recognition task e.g. vocabulary, grammar.

Although it is possible to obtain that probability, we want to consider the following simplified cases.

This operation to calculate the $\hat{b}$ can be simplified with three approximations. The first one uses equal probabilities for $P_H\,(p)$ or constraint C.

1. Use equal probabilities for $P_H\,(p)$:

$$P_H\ (p)\ =\ C \qquad\qquad\qquad (9)$$

2. Use equal probabilities for $P_H\,(p)$, $P_{J|H}\,(j|p)$ and $P_{K|H,J}\,(k|p,j)$.

$$P_H\ (p)\ =\ C$$

$$P_{J|H}\ (j|p)\ =\ D$$

$$\qquad\qquad (10)$$

$$P_{K|H,|J}\ (k|p,j)\ =\ E$$

3. In fact, the case described in Eq-10 consists in averaging the compensated mean vectors $\bar{m}_{p,j,k}$. Referring to Eq-4 and Eq-1, it can be expected that the averaging reduces the speech part $m_{p,j,k}$ just as CMN does. Therefore, Eq-7 could be further simplified into:

$$\hat{b}\ =\ IDFT\ (DFT(b)\ \oplus\ DFT\ (\tilde{X}))\,.$$

$$(11)$$

The model $\mathbf{m}^T_{p,j,k,t}$ is then used with CMN on noisy speech. Unfortunately, $\hat{b}$ is a function of both channel and background noise in all above cases. In other words, in presence of noise, there is no guarantee that the channel will be removed by such a vector, as is for CMN.

A subset of WAVES database containing hands-free recordings was used, which consists of three recording sessions: parked-trn (car parked, engine off), parked (car parked, engine off), and city-driving (car driven on a stop and go basis).

In each session, 20 speakers (10 male) read 40 sentences each, giving 800 utterances. Each sentence is either 10, 7 or 4 digit sequence, with equal probabilities. The database is sampled at 8kHz, with MFCC analysis frame rate of 20ms. Feature vector consists of 10 static and 10 dynamic coefficients.

HMMs used in all experiments are trained in TIDIGITS clean speech data. Utterance-based cepstral mean normalization is used. The HMMs contain 1957 mean vectors, and 270 diagonal variances. Evaluated on TIGIDIT test set, the recognizer gives 0.36% word error rate.

To improve the performance in noisy environment, the variances of the Gaussian PDFs can be MAP adapted to some slightly noisy data, e.g. WAVES parked_eval data. Such adaptation will not affect recognition of clean speech, but will reduce variance mismatch between HMMs the noisy speech. The new algorithm is referred to as JAC (joint compensation of additive noise and convolutive distortion).

Table 1: word error rate (WER) (%) as function of driving conditions and compensations methods

|  | PARKED | DRIVING |
|---|---|---|
| BASELINE | 1.38 | 30.3 |
| CMN | 0.59 | 18.8 |
| PMC | 1.74 | 6.29 |
| JAC FULL PROB (Eq-7) | 0.84 | 1.93 |
| JAC CONST PDF PROB (Eq-9) | 0.84 | 2.00 |
| JAC AVERAGE (Eq-10) | 1.16 | 2.18 |
| JAC SIMPLIFIED (Eq-11) | 0.48 | 1.91 |

Table-1 shows that:

- Compared to noise-free recognition (WER) (0.36%), without any compensation (BASELINE) the recognition performance degrades severely.

- CMN effectively reduces the WER for parked data, but is not effective for driving conditions where additive noise becomes dominant.

- PMC substantially reduces the WER for driving conditions, but gives poor results for parked data where microphone mismatch is dominant.

- All JAC cases give lower WER than non-JAC methods.

- Simplifying Eq-7 to Eq-9 then to Eq-10 results in progressive increase in WER, although the degradation is not severe. Especially, information in PDF probability is not critical to the performance.

- Simplified JAC gives lowest WER in all tests. For this hands-free speech recognition, the new method reduces word error rate by 61% for parked condition and 94% for city driving condition.

## Claims

1. A method of modifying original Hidden Markov models (HMM) trained on clean speech with cepstral mean normalization to provide adapted models that compensate for simultaneous convolutive distortion and additive noise comprising the steps of:

for each speech utterance:

calculating (2) a mean mel-scaled cepstrum coefficients (MFCC) vector b over the clean database;
adding (3) the mean MFCC vector b to the mean vectors $m_{p,j,k}$ of the original HMM models, where p is the index of the probability density function of (PDF), j is the state, and k the mixing component, to get $\bar{m}_{p,j,k}$ ;

for the given speech utterance calculating (4) an estimate of the background noise vector $\tilde{X}$ ;

calculating (5) model mean vectors adapted to the noise $\bar{\mathbf{m}}_{p,j,k}$ = IDFT (DFT ($\bar{\mathbf{m}}_{p,j,k}$) $\oplus$ DFT ($\tilde{X}$)), where the Inverse Discrete Fourier Transform is taken of the combination $\oplus$ of the Discrete Fourier Transform of the mean vectors $\bar{\mathbf{m}}_{p,j,k}$ and the Discrete Fourier Transform of the estimated noise $\tilde{X}$, the combination operator $\oplus$ being defined by $\mathbf{w}^l \triangleq \mathbf{u}^l \oplus \mathbf{v}^l = [w_1^l, w_2^l, \cdots w_D^l]^T$ with

$$\mathbf{u}^l \triangleq [u_1^l, u_2^l, \cdots u_D^l]^T, \quad \mathbf{v}^l \triangleq [v_1^l, v_2^l, \cdots v_D^l]^T \quad \text{and}$$

$$w_j^l = \log(\exp(u_j^l) + \exp(v_j^l)); \text{ and}$$

calculating (6) a mean vector $\hat{\mathbf{b}}$ of the noisy data over the noisy speech space, and removing (7) the mean vector $\hat{\mathbf{b}}$ of the noisy data from the model mean vectors adapted to noise $\hat{\mathbf{m}}_{p,j,k}$ to get the adapted models.

2. The method of Claim 1 wherein the step of calculating the mean vector $\hat{\mathbf{b}}$ of the noisy data over the noisy speech space calculates the vector using statistics of noisy model using : $\hat{\mathbf{b}} = \Sigma_p \Sigma_j \Sigma_k P_H (p) P_{J|H} (j| p) P_{K|H,J} (k|p,j) \hat{\mathbf{m}}_{p,j,k}$ where $H$ is the variable denoting PDF Index, $J$ is the variable for the state index, and $K$ is the variable for mixing component index

3. The method of Claim 2 wherein said calculating the mean vector $\hat{\mathbf{b}}$ uses equal probabilities for $PH$ $(p)$:

$$P_H (p) = C.$$

4. The method of Claim 2 wherein equal probabilities for $P_H (p)$, $P_{J|H}(j|p)$ and $P_{K|H,J} (k|p, j)$ are used:

$$P_H (p) = C,$$

$$P_{J|H} (j|p) = D,$$

$$P_{K|H,J}(k|p,j) = E.$$

5. The method of Claim 3 wherein mean vector $\hat{\mathbf{b}}$ becomes equal to:

$$\hat{\mathbf{b}} = IDFT (DFT(\mathbf{b}) \oplus DFT (\tilde{X})).$$

6. A method of speech recognition with compensation for simultaneous convolutive distortion and additive noise, comprising the steps of:

   providing Hidden Markov models (HMM) trained on clean speech with cepstral mean normalization; and modifying said models by the method of any preceding claim.

7. A speech recognizer with compensation for simultaneous convolutive distortion and additive noise comprising in combination:

   means for generating adapted Hidden Markov models (HMM) by modifying original HMM models trained on clean speech with cepstral mean normalization, said means for generating comprising:

   - means for, for each speech utterance,

calculating a mean mel-scaled cepstrum coefficients (MFCC) vector b over the clean database;

- means for adding the mean MFCC vector b to the mean vectors $m_{p,j,k}$ of the original HMM models, where p is the index of the probability density function of (PDF), j is the state, and k the mixing component, to get $\overline{m}_{p,j,k}$;
- means for, for the given speech utterance, calculating an estimate of the background noise vector $\tilde{X}$;
- means for calculating model mean vectors adapted to the noise $\hat{m}_{p,j,k}$ = IDFT (DFT ($\overline{m}_{p,j,k}$) $\oplus$ DFT ($\tilde{X}$), where the Inverse Discrete Fourier Transform is taken of the combination $\oplus$ of the Discrete Fourier Transform of the mean vectors $\overline{m}_{p,j,k}$ and the Discrete Fourier Transform of the estimated noise $\tilde{X}$, the combination

operator $\oplus$ being defined by $w^l \triangleq u^l \oplus v^l = [\,w_1^l, w_2^l, \cdots w_D^l\,]_l^T$ with

$u^l \triangleq [\,u_1^l, u_2^l, \cdots u_D^l\,]_l^T \quad v^l \triangleq [\,v_1^l, v_2^l, \cdots v_D^l\,]^T$ and

$w_j^l = \log(\exp(u_j^l) + \exp(v_j^l))$; and

- means for calculating the mean vector $\hat{b}$ of the noisy data over the noisy speech space, and means for removing the mean vector $\hat{b}$ of the noisy data from the model mean vectors adapted to noise $\hat{m}_{p,j,k}$ to get the adapted models; and

means for comparing the adapted models to the speech utterance to recognize the input speech

8. The recognizer of Claim 7 wherein the means for calculating the mean vector $\hat{b}$ of the noisy data over the noisy speech space calculate the vector using statistics of noisy model using : $\hat{b} = \sum_p \sum_j \sum_k P_H(p) P_{J|H}(j|p) P_{K|H,J}(k|p,j) \hat{m}_{p,j,k}$ where $H$ is the variable denoting PDF Index, J is the variable for the state index and K is the variable for mixing component index.

9. The recognizer of Claim 8 wherein said means for calculating the mean vector $\hat{b}$ use equal probabilities for $P_H(p)$ :

$$P_H(p) = C.$$

10. The recognizer of Claim 8 wherein equal probabilities for $P_H(p)$, $P_{J|H}(j|p)$ and $P_{K|H,J}(k|p,j)$ are used:

$$P_H(p) = C_l$$

$$P_{J|H}(j|p) = D_l$$

$$P_{K|H,J}(k|p,j) = E.$$

11. The recognizer of Claim 8 wherein mean vector $\hat{b}$ becomes equal to:

$$\hat{b} = IDFT(DFT(b) \oplus DFT(\tilde{X})).$$

12. A method of speech recognition with simultaneous compensation for both convolutive distortion and additive noise comprising the steps of:

modifying HMM models by a method as claimed in any of claims 1 to 5.

**Patentansprüche**

1. Verfahren zum Modifizieren originaler Hidden-Markov-Modelle (HMM), die an unverfälschter Sprache mit Cepstral-Mittelwertnomierung trainiert sind, um angepasste Modelle zu schaffen, die gleichzeitig eine Faltungsverzerrung und additives Rauschen kompensieren, das die folgenden Schritte umfasst:

   für jede Sprachäußerung:

   Berechnen (2) eines mittleren mel-skalierten Cepstrumkoeffizienten-Vektors (MFCC-Vektor) b über die unverfälschte Datenbank;
   Addieren (3) des mittleren MFCC-Vektors b zu den mittleren Vektoren $m_{p,j,k}$ der originalen HMM-Modelle, wobei p der Index der Wahrscheinlichkeitsdichtefunktion (PDF) ist, j der Zustand ist und k die Mischungskomponente ist, um $\bar{m}_{p,j,k}$ zu erhalten;
   Berechnen (4) eines Schätzwerts des Hintergrundrauschvektors $\tilde{X}$ für die gegebene Sprachäußerung;
   Berechnen (5) von an das Rauschen angepassten mittleren Modellvektoren $\hat{m}_{p,j,k}$ = IDFT(DFT($\bar{m}_{p,j,k}$)$\oplus$ DFT($\hat{X}$)), wobei die inverse diskrete Fourier-Transformation aus der Kombination $\oplus$ der diskreten Fourier-Transformation der mittleren Vektoren $\bar{m}_{p,j,k}$ und aus der diskreten Fourier-Transformation des geschätzten Rauschens $\tilde{X}$ gebildet wird, wobei der Kombinationsoperator $\oplus$ definiert ist durch

$$w^l \underset{=}{\triangle} u^l \oplus v^l = \left[w_1^l, w_2^l, \ldots w_D^l\right]^T, \qquad \text{mit}$$

$$u^l \underset{=}{\triangle} \left[u_1^l, u_2^l, \ldots u_D^l\right]^T, \quad v^l \underset{=}{\triangle} \left[v_1^l, v_2^l, \ldots v_D^l\right]^T; \text{ und } w_j^l = \log\left(\exp\left(u_j^l\right) + \exp\left(v_j^l\right)\right); \text{ und}$$

   Berechnen (6) eines mittleren Vektors $\bar{b}$ der verrauschten Daten über dem verrauschten Sprachraum und Entfernen (7) des mittleren Vektors $\bar{b}$ der verrauschten Daten aus den an das Rauschen angepassten mittleren Modellvektoren $\hat{m}_{p,j,k}$, um die angepassten Modelle zu erhalten.

2. Verfahren nach Anspruch 1, bei dem der Schritt des Berechnens des mittleren Vektors $\hat{b}$ der verrauschten Daten über den verrauschten Sprachraum den Vektor unter Verwendung einer Statistik des verrauschten Modells unter Verwendung von

$$\hat{b} = \sum_p \sum_j \sum_k P_H(p)\, P_{J|H}(j|p)\, P_{K|H,J}(k|p,j)\, \hat{m}_{p,j,k}$$

   berechnet, wobei H die Variable ist, die den PDF-Index bezeichnet, J die Variable für den Zustandsindex ist und K die Variable für den Mischungskomponenten-Index ist.

3. Verfahren nach Anspruch 2, bei dem das Berechnen des mittleren Vektors $\hat{b}$ gleiche Wahrscheinlichkeiten für $P_H$(p) verwendet:

$$P_H(p) = C$$

4. Verfahren nach Anspruch 2, bei dem für $P_H$(p), $P_{J|H}$(j|p) und $P_{K|H,J}$(k|p, j) gleiche Wahrscheinlichkeiten verwendet werden:

$$P_H(p) = C,$$

$$P_{J|H}(j|p) = D,$$

$$P_{K|H,J}(k|p,j) = E.$$

**5.** Verfahren nach Anspruch 3, bei dem der mittlere Vektor $\hat{b}$ gleich

$$\hat{b} = IDFT\big(DFT(b) \oplus DFT(\hat{X})\big)$$

wird.

**6.** Verfahren zur Spracherkennung mit gleichzeitiger Kompensation einer Faltungsverzerrung und eines additiven Rauschens, das die folgenden Schritte umfasst:

Bereitstellen von Hidden-Markov-Modellen (HMM), die an unverfälschter Sprache mit Cepstral-Mittelwertnormierung trainiert sind; und Modifizieren der Modelle durch das Verfahren nach einem der vorhergehenden Ansprüche.

**7.** Spracherkennungseinrichtung mit gleichzeitiger Kompensation einer Faltungsverzerrung und des additiven Rauschens, die in Kombination umfasst:

- Mittel zum Erzeugen angepasster Hidden-Markov-Modelle (HMM) durch Modifizieren originaler HMM-Modelle, die an unverfälschter Sprache mit Cepstral-Mittelwertnormierung trainiert sind, wobei die Erzeugungsmittel umfassen:
- Mittel, die für jede Sprachäußerung einen mittleren mel-skalierten Cepstrumkoeffizienten-Vektor (MFCC-Vektor) b über die unverfälschte Datenbank berechnen;
- Mittel zum Addieren des mittleren MFCC-Vektors b zu den mittleren Vektoren $m_{p,j,k}$ der originalen HMM-Modelle, wobei p der Index der Wahrscheinlichkeitsdichtefunktion (PDF) ist, j der Zustand ist und k die Mischungskomponente ist, um $\bar{m}_{p,j,k}$ zu erhalten;
- Mittel, die für eine gegebene Sprachäußerung einen Schätzwert des Hintergrundrauschvektors $\tilde{X}$ berechnen;
- Mittel zum Berechnen von an das Rauschen angepassten mittleren Modellvektoren $\hat{m}_{p,j,k} = IDFT(DFT(\bar{m}_{p,j,k}) \oplus DFT(\hat{X}))$, wobei die inverse diskrete Fourier-Transformation aus der Kombination $\oplus$ der diskreten Fourier-Transformation der mittleren Vektoren $\bar{m}_{p,j,k}$ und aus der diskreten Fourier-Transformation des geschätzten Rauschens $\tilde{X}$ gebildet wird, wobei der Kombinationsoperator $\oplus$ definiert ist durch

$$w^l \underset{=}{\triangle} u^l \oplus v^l = \left[w_1^l, w_2^l, ... w_D^l\right]^T, \quad \text{mit} \quad u^1 \underset{=}{\triangle} \left[u_1^1, u_2^1, ... u_D^1\right]^T, \quad v^1 \underset{=}{\triangle} \left[v_1^1, v_2^1, ... v_D^1\right]^T; \quad \text{und}$$

$$w_j^1 = \log\big(\exp\big(u_j^1\big) + \exp\big(v_j^1\big)\big); \text{ und}$$

- Mittel zum Berechnen des mittleren Vektors b der verrauschten Daten über den verrauschten Sprachraum und Mittel zum Entfernen des mittleren Vektors $\hat{b}$ der verrauschten Daten aus den an das Rauschen angepassten mittleren Modellvektoren $\bar{m}_{p,j,k}$, um die angepassten Modelle zu erhalten; und
- Mittel zum Vergleichen der angepassten Modelle mit der Sprachäußerung, um die Eingangssprache zu erkennen.

**8.** Erkennungseinrichtung nach Anspruch 7, bei der die Mittel zum Berechnen des mittleren Vektors $\hat{b}$ der verrauschten Daten über den verrauschten Sprachraum den Vektor unter Verwendung einer Statistik des verrauschten Modells unter Verwendung von:

$$\hat{b} = \sum_p \sum_j \sum_k P_H(p)\, P_{J|H}(j|p)\, P_{K|H,J}(k|p,j)\, \hat{m}_{p,j,k}$$

berechnen, wobei H die Variable ist, die den PDF-Index bezeichnet, J die Variable für den Zustandsindex ist und K die Variable für den Mischungskomponenten-Index ist.

**9.** Erkennungseinrichtung nach Anspruch 8, bei der die Mittel zum Berechnen des mittleren Vektors $\hat{b}$ für $P_H(p)$ gleiche Wahrscheinlichkeiten verwendet:

$$P_H(p) = C$$

**10.** Erkennungseinrichtung nach Anspruch 8, bei der für $P_H(p)$, $P_{J|H}(j|p)$ und $P_{K|H,J}(k|p,j)$ gleiche Wahrscheinlichkeiten verwendet werden:

$$P_H(p) = C,$$

$$P_{J|H}(j|p) = D,$$

$$P_{K|H,J}(k|p,j) = E$$

**11.** Erkennungseinrichtung nach Anspruch 8, bei der der mittlere Vektor gleich

$$\hat{b} = \text{IDFT}\left(\text{DFT}(b) \oplus \text{DFT}(\hat{X})\right)$$

wird.

**12.** Verfahren zur Spracherkennung mit gleichzeitiger Kompensation sowohl der Faltungsverzerrung als auch des additiven Rauschens, das die folgenden Schritte umfasst:

Modifizieren von HMM-Modellen durch ein Verfahren nach einem der Ansprüche 1 bis 5.

## Revendications

**1.** Procédé de modification de modèles cachés de Markov (HMM) originaux entraînés sur une parole pure avec une normalisation moyenne cepstrale pour obtenir des modèles adaptés qui compensent la distorsion convolutive et le bruit additif simultanés comprenant les étapes de :

pour chaque énoncé vocal :

calcul (2) d'un vecteur de coefficients cepstraux en l'échelle mel moyen (MFCC) b sur la base de données pure ;
addition (3) du vecteur MFCC moyen b aux vecteurs moyens $m_{p,j,k}$ des modèles HMM originaux, où p est l'indice de la fonction de densité de probabilité (PDF), j est l'état et k la composante de mélange, pour obtenir $\overline{m}_{p,j,k}$ ;

pour l'énoncé vocal donné, calcul (4) d'une estimation du vecteur de bruit de fond $\tilde{X}$ ;

calcul (5) de vecteurs moyens de modèle adaptés au bruit $\hat{m}_{p,J,k} = IDFT(DFT(\overline{m}_{p,j,k}) \oplus DFT(\tilde{X}))$, où la transformée de Fourier discrète inverse est constituée de la combinaison $\oplus$ de la transformée de Fourier discrète des vecteurs moyens $\overline{m}_{p,j,k}$ et de la transformée de Fourier discrète du bruit estimé $\tilde{X}$ l'opérateur

de combinaison ⊕ étant défini par $w_u^l \overset{\Delta}{=} u^l \oplus v^l = [w_1^l, w_2^l, ..., w_D^l]^T$ avec $u^l \overset{\Delta}{=} [u_1^l, u_2^l, ..., u_D^l]^T$, $v^l \overset{\Delta}{=} [v_1^l, v_2^l, ..., v_D^l]^T$ et $W_j^l = \log(\exp(u_j^l) + \exp(v_j^l))$ ; et

calcul (6) d'un vecteur moyen $\hat{b}$ des données bruitées sur l'espace vocal bruité, et élimination (7) du vecteur moyen $\hat{b}$ des données bruitées des vecteurs moyens de modèle adaptés au bruit $\hat{m}_{p,j,k}$ pour obtenir les modèles adaptés.

2. Procédé selon la revendication 1 dans lequel l'étape de calcul du vecteur moyen b des données bruitées sur l'espace vocal bruité calcule le vecteur en utilisant des statistiques de modèle bruité en utilisant :

$\hat{b} = \Sigma_p \Sigma_j \Sigma_k P_{H'}(p) P_{J|H'}(j|p) P_{K|H,J}(k|p,j) \hat{m}_{p,j,k}$ où $H$ est la variable désignant l'indice de PDF, J est la variable pour l'indice d'état, et K est la variable pour l'indice de composante de mélange.

3. Procédé selon la revendication 2 dans lequel ledit calcul du vecteur moyen $\hat{b}$ utilise des probabilités égales pour $P_H(p)$ :

$$P_H(p) = C.$$

4. Procédé selon la revendication 2 dans lequel des probabilités égales pour $P_H(p)$, $P_{J|H}(j|p)$ et $P_{K|H,J}(k|p,j)$ sont utilisées :

$$P_H(p) = C,$$

$$P_{J|H}(j|p) = D,$$

$$P_{K|H,J}(k|p,j) = E.$$

5. Procédé selon la revendication 3 dans lequel le vecteur moyen $\hat{b}$ devient égal à :

$$\hat{b} = IDFT(DFT(b) \oplus DFT(\widetilde{X})).$$

6. Procédé de reconnaissance vocale avec compensation de la distorsion convolutive et du bruit additif simultanés, comprenant les étapes de :

fourniture de modèles cachés de Markov (HMM) entraînés sur une parole pure avec normalisation moyenne cepstrale ; et modification desdits modèles par le procédé de l'une quelconque des revendications précédentes.

7. Dispositif de reconnaissance vocale avec compensation de la distorsion convolutive et du bruit additif simultanés comprenant en combinaison :

des moyens pour générer des modèles cachés de Markov (HMM) adaptés en modifiant des modèles HMM originaux entraînés sur une parole pure avec normalisation moyenne cepstrale, lesdits moyens de génération comprenant :

des moyens pour, pour chaque énoncé vocal, calculer un vecteur de coefficients cepstraux à échelle de mel moyen (MFCC) b sur la base de données pure ; des moyens pour additionner le vecteur MFCC moyen b aux vecteurs moyens $m_{p,j,k}$ des modèles HMM originaux, où p est l'indice de la fonction de densité de probabilité (PDF), j est l'état et k est la composante de mélange, pour obtenir $\bar{m}_{p,j,k}$ ;

des moyens pour, pour l'énoncé vocal donné, calculer une estimation du vecteur de bruit de fond $\tilde{X}$ ;

des moyens pour calculer des vecteurs moyens de modèle adaptés au bruit $\hat{m}_{p,j,k} = IDFT(DFT(\bar{m}_{p,j,k}) \oplus DFT(\tilde{X}))$, où la transformée de Fourier discrète inverse est constituée de la combinaison $\oplus$ de la transformée de Fourier discrète des vecteurs moyens $\bar{m}_{p,j,k}$ et de la transformée de Fourier discrète du bruit estimé $\tilde{X}$,

l'opérateur de combinaison $\oplus$ étant défini par $w^l \overset{\Delta}{==} u^l \oplus v^l = [w_1^l, w_2^l, ..., w_D^l]^T$ avec $u^l \overset{\Delta}{==} [u_1^l, u_2^l, ..., u_D^l]^T$,

$v^l \overset{\Delta}{==} [v^l_1, v^l_2, ..., v^l D]^T$ et $w^l_j = \log(\exp(u^l_j) + \exp(v^l_j))$ ; et

des moyens pour calculer le vecteur moyen $\hat{b}$ des données bruitées sur l'espace vocal bruité, et des moyens pour éliminer le vecteur moyen $\hat{b}$ des données bruitées des vecteurs moyens de modèle adaptés au bruit $\hat{m}_{p,j,k}$ pour obtenir les modèles adaptés ; et

des moyens pour comparer les modèles adaptés à l'énoncé vocal pour reconnaître la parole en entrée.

8. Dispositif de reconnaissance selon la revendication 7 dans lequel les moyens pour calculer le vecteur moyen $\hat{b}$ des données bruitées sur l'espace vocal bruité calculent le vecteur en utilisant des statistiques de modèle bruité en utilisant : $\hat{b} = \sum_p \sum_j \sum_k P_H (P) P_{J|H} (j|p) P_{K|H,J} (k|p,j)_{p,j,k}$

où H est la variable désignant l'indice de PDF, J est la variable pour l'indice d'état, et K est la variable pour l'indice de composante de mélange.

9. Dispositif de reconnaissance selon la revendication 8 dans lequel lesdits moyens pour calculer le vecteur moyen utilisent des probabilités égales pour $P_H(p)$ :

$$P_H(p) = C.$$

10. Dispositif de reconnaissance selon la revendication 8 dans lequel des probabilités égales pour $P_H(p)$, $P_{J|H}(j|p)$ et $P_{K|H,J}(k|p,j)$ sont utilisées :

$$P_H(p) = C,$$

$$P_{J|H}(j|p) = D,$$

$$P_{K|H,J}(k|p,j) = E.$$

11. Dispositif de reconnaissance selon la revendication 8 dans lequel le vecteur moyen $\hat{b}$ devient égal à :

$$\hat{b} = IDFT(DFT(b) \oplus DFT(\tilde{X})).$$

12. Procédé de reconnaissance vocale avec compensation simultanée de la distorsion convolutive et du bruit additif comprenant les étapes de :

modification des modèles HMM par un procédé selon l'une quelconque des revendications 1 à 5.

## FIG. 1

11 — SPEECH → [ RECOGNIZER ] → RECOGNIZED SPEECH

13c — [ HMM ADAPTED ]

NOISE ESTIMATE → [ ADAPTATION ] — 13b

13a — [ HMM ]

## FIG. 2

1 — [ HMM TRAINED WITH MEAN NORMALIZATION ]

2 — [ CALCULATE $b$ ]

3 — [ ADD $b$ TO EACH OF $M_{p,j,k}$ ]

4 — [ ESTIMATE NOISE FOR TEST UTTERANCE ]

5 — [ APPLY EQUATION 4 CALCULATE MEAN VECTORS ADAPTED TO NOISE ]

6 — [ CALCULATE TO GET $\hat{b}$ ]

7 — [ REMOVE $\hat{b}$ TO GET TARGET MODEL (EQUATION 8) ]

8 — < ANOTHER UTTERANCE ? > —YES

NO

( END )